# EUROPEAN PATENT APPLICATION

(11) **EP 4 378 732 A1**
(43) Date of publication of application: **05.06.2024**
(21) Application number: 22849048.8
(22) Date of filing: 14.06.2022
(51) Int. Cl.: B60K 11/04, B60K 1/04, B62J 41/00, B62J 43/16, B62J 43/20, B62J 45/00, B62J 50/30, H01M 10/613, H01M 10/625, H01M 10/651, H01M 10/6551, H01M 10/6556, H01M 10/6563, H01M 10/6568

(54) **ELECTRIC VEHICLE**

(30) Priority: 30.07.2021 JP 2021125523
(71) Applicant: Yamaha Hatsudoki Kabushiki Kaisha, Iwata-shi, Shizuoka 438-8501 (JP)
(72) Inventor: ITO, Jin, Iwata-shi, Shizuoka 438-8501 (JP)
(74) Representative: Studio Torta S.p.A.
(86) International application number: PCT/JP2022/023844
(87) International publication number: WO 2023/007971

(57) **Abstract**

There is disclosed an electric vehicle (1) includes an electric motor (20) that generates a driving force for traveling, a battery, and an inverter that converts DC power generated by the battery to AC power and supplies it to the electric motor (20); the electric vehicle (1) further includes a battery case (30), a cooling jacket (33) that is provided at least at one of the electric motor (20) and the inverter (22), and a pump (38); the battery case (30) being provided with a housing space (30A) that houses the battery (31), a liquid-tight space (30B) that is isolated from the housing space (30A), and a coolant entrance (30C) and a coolant exit (30D) that are in communication with the liquid-tight space (30B); the battery case (30) having an air-cooling portion (30E) that defines the liquid-tight space (30B) and is exposed to a traveling wind; the pump (38) makes a coolant flow inside a coolant flow passage (36) passing from the liquid-tight space (30B) and successively through the coolant exit (30D), the cooling jacket (33), and the coolant entrance (30C) and returning to the liquid-tight space (30B). (Figure 3)

## Description

### Cross Reference to Related Applications

This application claims the benefit of priority to Japanese Patent Application No. 2021-125523 filed on July 30, 2021 and the entire contents of this application are hereby incorporated herein by reference.

### Technical Field

This invention relates to an electric vehicle.

### Background Art

A straddled electric vehicle disclosed in Patent Literature 1 includes a frame, a front fork that is supported by a front end portion of the frame, a front wheel that is supported by the front fork, a rear unit that is supported by a rear lower portion of the frame, and a rear wheel that is supported by the front fork. The straddled electric vehicle includes an electric drive motor that is supported by the frame and drives the rear wheel, a seat that is provided at a rear upper portion of the frame, and a battery that is disposed below the seat and supplies electric power to the drive motor. The battery is housed inside a battery case.

### Citation List

### Patent Literature

Patent Literature 1: Japanese Patent Application Publication No. 2021-66289

### Summary of Invention

### Technical Problem

With an electric vehicle, increase in cruising distance is being demanded and for this purpose, a capacity of a battery is necessarily to be increased. Accordingly, a battery case becomes a large component that is high in proportion of occupying an entirety of the electric vehicle in some cases. On the other hand, other electric components than the battery such as an electric motor and an inverter that are essential to the electric vehicle need to be operated at not higher than an operating temperature limit. Depending on heat generation amounts of these electric components, a cooling structure for the electric components other than the battery becomes necessary in some cases. Depending on restrictions of layout in the electric vehicle, it is also possible to assume cases where design of positioning of the cooling structure in addition to the large battery case is difficult. Even if this is possible, it does not mean that a radiator of large size is enabled to be disposed as the cooling structure at a position advantageous for cooling.

One preferred embodiment of the present invention provides an electric vehicle that enables a novel cooling structure for electric components other than a battery to be constructed.

### Solution to Problem

A preferred embodiment of the present invention provides an electric vehicle including an electric motor that generates a driving force for making the electric vehicle travel, a battery, and an inverter that converts DC power generated by the battery to AC power and supplies the AC power to the electric motor. The electric vehicle further includes a battery case, a cooling jacket that is provided at least at one of the electric motor and the inverter, and a pump. The battery case is provided with a housing space that houses the battery, a liquid-tight space that is isolated from the housing space, and a coolant entrance and a coolant exit that are in communication with the liquid-tight space. The battery case has an air-cooling portion that defines the liquid-tight space and is exposed to a traveling wind. The pump makes a coolant flow inside a coolant flow passage passing from the liquid-tight space and successively through the coolant exit, the cooling jacket, and the coolant entrance and returning to the liquid-tight space.

According to this arrangement, the electric motor and the inverter are electric components other than the battery. When the pump operates, the coolant passes from the liquid-tight space provided in the battery case and successively through the coolant exit, the cooling jacket, and the coolant entrance and returns to the liquid-tight space. The liquid-tight space is defined by the air-cooling portion of the battery case that is exposed to the traveling wind. Since the coolant is thus cooled by the air-cooling portion when passing through the liquid-tight space, it arrives at the cooling jacket in a state of comparatively low temperature after flowing out from the coolant exit. The electric components provided with the cooling jacket are thereby cooled by heat exchange with the coolant. Although the coolant that has passed through the cooling jacket becomes comparatively high in temperature due to heat exchange with the electric components, it flows into the liquid-tight space from the coolant entrance and is cooled again by the air-cooling portion. A temperature of the coolant flowing into the liquid-tight space from the coolant entrance is thus higher than a temperature of the coolant flowing out from the coolant exit.

The cooling jacket, the battery case, the pump, and the coolant flow passage thus constitute a cooling structure for the electric components other than the battery. A novel cooling structure is thus enabled to be constructed for the electric components by making use of the battery case.

In a preferred embodiment of the present invention, the battery case includes an inner case that covers at least a portion of an outer surface of the battery and an outer case that is provided with the air-cooling portion and covers at least a portion of an outer surface of the inner case. In this case, the liquid-tight space is defined between the inner case and the outer case. According to this arrangement, it is possible to make the battery case have a double structure and use a portion between the inner case and the outer case effectively as the liquid-tight space.

In this case, the outer surface of the inner case may include a plurality of surfaces that are exposed to the liquid-tight space.

In a preferred embodiment of the present invention, the air-cooling portion is provided at a lower surface of the outer case.

In a preferred embodiment of the present invention, a battery liquid-tight space that is arranged to cool a battery cell is provided in an interior of the battery. The inner case includes a first inner case that covers at least a portion of the outer surface of the battery inside the housing space and a second inner case that covers at least a portion of the first inner case and defines the liquid-tight space with the outer case. The electric vehicle further includes a battery radiator and a battery pump that makes a coolant flow inside a battery coolant flow passage passing from the battery liquid-tight space and through the battery radiator and returning to the battery liquid-tight space.

According to this arrangement, when the battery pump operates, the coolant for cooling the battery cell passes from the battery liquid-tight space provided in the interior of the battery and through the battery radiator and returns to the battery liquid-tight space. Since the coolant is thus cooled when passing through the battery radiator, it returns to the battery liquid-tight space in a state of comparatively low temperature and cools the battery cell inside the battery. It is thus possible to cool the battery cell by a cooling structure separate from the cooling structure for the electric components other than the battery.

In a preferred embodiment of the present invention, a battery liquid-tight space is defined between the inner case and the battery. The electric vehicle further includes a battery radiator and a battery pump that makes a coolant flow inside a battery coolant flow passage passing from the battery liquid-tight space and through the battery radiator and returning to the battery liquid-tight space.

According to this arrangement, when the battery pump operates, the coolant for cooling the battery passes from the battery liquid-tight space between the inner case and the battery and through the battery radiator and returns to the battery liquid-tight space. Since the coolant is thus cooled when passing through the battery radiator, it returns to the battery liquid-tight space in a state of comparatively low temperature and cools the battery. It is thus possible to cool the battery by a cooling structure separate from the cooling structure for the electric components besides the battery.

In a preferred embodiment of the present invention, a radiator is not installed in the coolant flow passage. According to this arrangement, since a radiator is omitted from the cooling structure for the electric components besides the battery, it is possible to reduce the number of components in the cooling structure.

In a preferred embodiment of the present invention, the electric vehicle further includes a radiator that cools the coolant flowing inside the coolant flow passage from the coolant exit toward the cooling jacket.

According to this arrangement, the cooling structure for the electric components besides the battery includes the radiator. Therefore, in passing through the liquid-tight space, the coolant is cooled by the air-cooling portion of the battery case, is then further cooled by the radiator, and thereafter passes through the cooling jacket. The electric components provided with the cooling jacket are thereby enabled to be cooled effectively by the coolant. Also, a radiator that is compact suffices since the air-cooling portion of the battery case has a function of cooling the coolant.

In a preferred embodiment of the present invention, the radiator is disposed further to the front than the battery case. The radiator is thereby enabled to be disposed at a position likely to be exposed to the traveling wind, thus enabling an efficiency of cooling of the coolant by the radiator to be improved.

In a preferred embodiment of the present invention, a radiator is not installed. According to this arrangement, since the electrical vehicle is without any radiator, it is possible to reduce the number of components.

In a preferred embodiment of the present invention, the cooling jacket includes a motor cooling jacket provided at the electric motor and an inverter cooling jacket provided at the inverter. In regard to a flow direction of the coolant flowing inside the coolant flow passage, the inverter cooling jacket is further separated upstream from the coolant entrance than the motor cooling jacket. That is, the coolant exit, the inverter cooling jacket, the motor cooling jacket, and the coolant entrance are disposed successively in regard to the flow direction of the coolant in the coolant flow passage. Thereby, the coolant flowing out from the coolant exit passes through the inverter cooling jacket and then passes through the motor cooling jacket.

An operating temperature of an inverter is generally lower than an operating temperature of an electric motor. Therefore, even if the coolant is made to flow through the inverter cooling jacket and the inverter is cooled first, the temperature of the coolant after passing through the inverter cooling jacket is lower than the operating temperature of the electric motor, thus enabling this coolant to flow through the motor cooling jacket to be used to cool the electric motor as well.

In a preferred embodiment of the present invention, the air-cooling portion may include a heat sink.

In a preferred embodiment of the present invention, the air-cooling portion may be detachable with respect to the battery case.

In a preferred embodiment of the present invention, the electric vehicle is a straddled electric vehicle that includes a front wheel and a rear wheel. According to this arrangement, the battery case is enabled to be used as the cooling structure for the electric components other than the battery thus enabling the cooling structure to be adopted even with the straddled electric vehicle that is comparatively high in restrictions of layout. With the straddled electric vehicle, it is possible to proactively dispose the battery case such as to be exposed on an outside of the straddled electric vehicle, enabling the air-cooling portion of the battery to be exposed to the traveling wind efficiently. Also, with the straddled electric vehicle adopting the cooling structure, it is possible to omit the radiator. Even in a case of equipping a radiator, the radiator suffices to be one of a compact type. Size reduction of the straddled electric vehicle is thereby enabled. Installation of a battery of large capacity is enabled by omitting or making compact the radiator, thus enabling a cruising distance of the straddled electric vehicle to be increased.

In a preferred embodiment of the present invention, the battery case is disposed further to the front than the electric motor and the inverter in a region between the front wheel and the rear wheel. According to this arrangement, it is possible to efficiently expose the air-cooling portion of the battery case to the traveling wind. In this case, the electric motor may be disposed further to the rear than the inverter.

The above and yet other objects, features, and effects of the present invention will become apparent from the following description of preferred embodiments with reference to the attached drawings.

### Brief Description of Drawings

[FIG. 1] is a left side view of an electric vehicle according to a preferred embodiment of the present invention.
[FIG. 2] is a left side view of principal portions of the electric vehicle.
[FIG. 3] is a schematic view for describing a cooling structure according to a first preferred embodiment in the electric vehicle.
[FIG. 4] is a schematic view for describing a cooling structure according to a second preferred embodiment.
[FIG. 5] is a schematic view for describing a cooling structure according to a third preferred embodiment.
[FIG. 6] is a schematic sectional view of a battery case in a cooling structure according to a fourth preferred embodiment.
[FIG. 7] is a schematic sectional view of a battery case in a cooling structure according to a fifth preferred embodiment.
[FIG. 8] is a schematic sectional view of a battery case in a cooling structure according to a sixth preferred embodiment.
[FIG. 9] is a schematic sectional view of a battery case in a cooling structure according to a seventh preferred embodiment.
[FIG. 10] is a schematic view for describing a cooling structure according to an eighth preferred embodiment.
[FIG. 11] is a schematic view for describing a cooling structure according to a ninth preferred embodiment.
[FIG. 12] is a schematic view for describing a cooling structure according to a tenth preferred embodiment.
[FIG. 13] is a schematic view for describing a cooling structure according to an eleventh preferred embodiment.
[FIG. 14] is a schematic sectional view of a battery case in the cooling structure according to the eleventh preferred embodiment.
[FIG. 15] is a schematic view for describing a cooling structure according to a twelfth preferred embodiment. Description of Embodiments

In the following, an electric vehicle 1 according to a preferred embodiment of the present invention shall be described in detail with reference to the attached drawings. In the following description, a front-rear direction, a right-left direction, and an up-down direction are directions defined on basis of a viewpoint of an occupant driving the electric vehicle 1. The right-left direction is a vehicle width direction of the electric vehicle 1. Also, the description shall be made on basis of a state in which the electric vehicle 1 is placed on a horizontal surface.

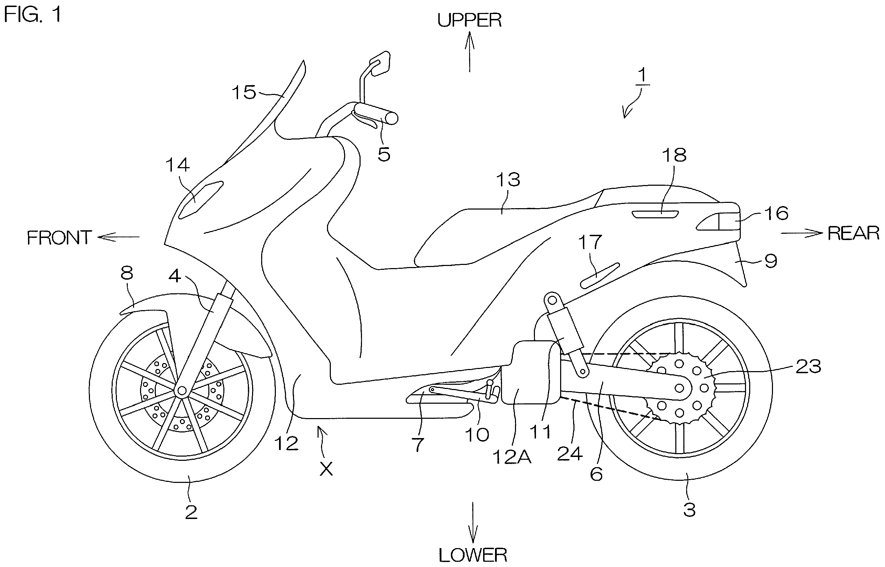

FIG. 1 is a left side view of the electric vehicle 1. One example of the electric vehicle 1 is a straddled electric vehicle that includes a front wheel 2 and a rear wheel 3 and is specifically an electric motorcycle and the number of each of the front wheel 2 and the rear wheel 3 may be single or a plurality, and each of the front wheel 2 and the rear wheel 3 may include not a tire but a crawler or other endless track. The electric vehicle 1 may be an electric vehicle other than a straddled electric vehicle. As a configuration of an electric vehicle other than a straddled electric vehicle, a configuration where a plurality of seats are disposed side by side in the right-left direction, etc., is able to be cited.

The electric vehicle 1 includes a front fork 4 that rotatably supports the front wheel 2, a handlebar 5 that is mounted to an upper end portion of the front fork 4, a swing arm 6 that rotatably supports the rear wheel 3, and a frame 7 that supports the front fork 4 and the swing arm 6. The front fork 4 is pivotable in the right-left direction and the swing arm 6 is swingable in the up-down direction. The front fork 4 is provided with a front fender 8 that covers an upper portion of the front wheel 2. A rear fender 9 that covers an upper portion of the rear wheel 3 is supported by the frame 7.

The electric vehicle 1 includes a stand 10 that is mounted on the frame 7, a rear shock 11 that connects the swing arm 6 and the frame 7, a cowling 12 that covers substantially an entirety of the frame 7, and a seat 13 that is supported by the frame 7 further to the rear than the handlebar 5. The cowling 12 may be a single component or an assembly constituted of a plurality of components. A gap (not shown) into which a traveling wind enters during traveling of the electric vehicle 1 is formed between the frame 7 and the cowling 12.

A headlight 14 is exposed at a front portion of the cowling 12. A wind screen 15 that covers the handlebar 5 from the front is provided at the front portion of the cowling 12. A brake lamp 16 is exposed at a rear portion of the cowling 12. The occupant drives the electric vehicle 1 by sitting on the seat 13 and manipulating the handlebar 5. A tandem step 17 and a grab bar 18 for double riding may be provided at the rear portion of the cowling 12.

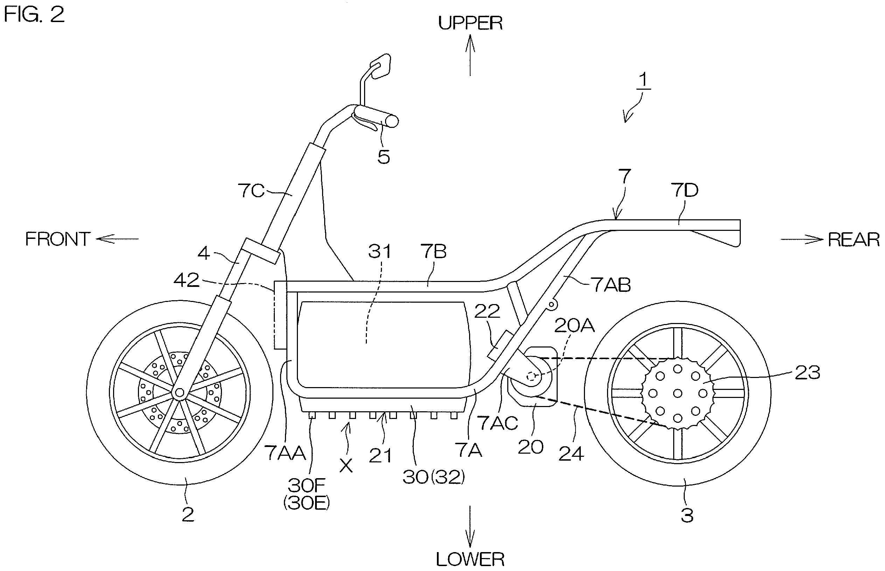

FIG. 2 is a left side view of principal portions of the electric vehicle 1 in a state where the swing arm 6, the front fender 8, the rear fender 9, the stand 10, the rear shock 11, the cowling 12, the seat 13, etc., are omitted. The frame 7 has a right and left pair of down tubes 7A, an upper tube 7B that is disposed above the down tubes 7A and extends in the front-rear direction, a front supporting portion 7C that rises upward from a front end portion of the upper tube 7B and supports the front fork 4, and a seat rail 7D that extends rearward from a rear end portion of the upper tube 7B.

The down tubes 7A are disposed between the front wheel 2 and the rear wheel 3 and extend in the front-rear direction. A front end portion 7AA of each down tube 7A curves and extends substantially perpendicularly upward and is connected to the front end portion of the upper tube 7B. A rear end portion 7AB of each down tube 7A extends obliquely rearward while curving upward and is connected to the rear end portion of the upper tube 7B. A bracket 7AC that projects rearward is provided at the rear end portion 7AB of at least one of the down tubes 7A.

The electric vehicle 1 includes an electric motor 20 that is fixed to the bracket 7AC of the down tube 7A, a battery unit 21 that is disposed between the right and left pair of down tubes 7A, and an inverter 22 that is fixed to the rear end portion 7AB of at least one of the down tubes 7A. The cowling 12 may have a protective cover 12A that covers the bracket 7AC and the electric motor 20 from a side (see FIG. 1).

One example of the electric motor 20 is a three-phase AC motor. The electric motor 20 has an output shaft 20A that extends in the right-left direction. A sprocket 23 is fixed to the rear wheel 3. The output shaft 20A and the sprocket 23 are connected by a chain 24. When the electric motor 20 operates and generates a driving force, the output shaft 20A rotates and by the driving force of the electric motor 20 being transmitted to the sprocket 23 by the chain 24, the rear wheel 3 rotates. The electric vehicle 1 thereby travels. A pulley may be used in place of the sprocket 23 and a belt may be used in place of the chain 24.

The battery unit 21 is disposed in a region X between the front wheel 2 and the rear wheel 3. The battery unit 21 includes a battery case 30 of box shape that constitutes an outer shell of the unit and a battery 31 that is disposed inside the battery case 30.

The battery case 30 is elongated in the front-rear direction, occupies a large portion of the region X, is disposed between the pair of down tubes 7A, and is fixed to each down tube 7A. The battery case 30 is formed of aluminum or other material of high heat capacity. The battery case 30 is exposed to the traveling wind that flows through the gap between the frame 7 and the cowling 12. Also, the cowling 12 may be provided with an inlet or guide (not shown) that guides the traveling wind to the battery case 30. A lower portion of the battery case 30 may be exposed toward a ground surface without being covered by the cowling 12.

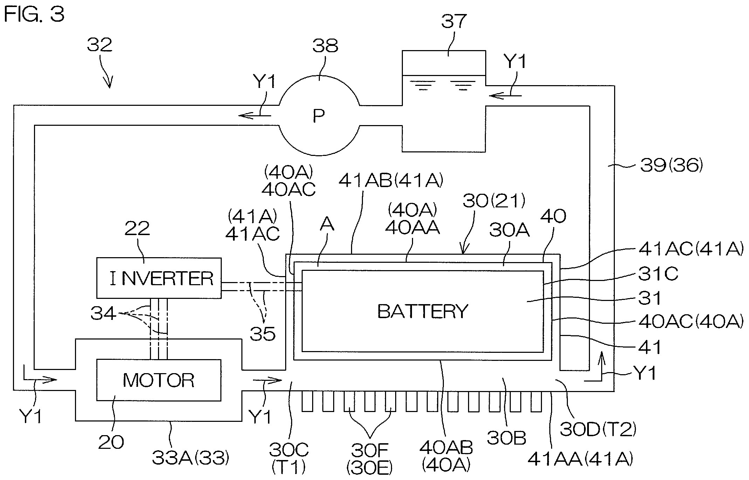

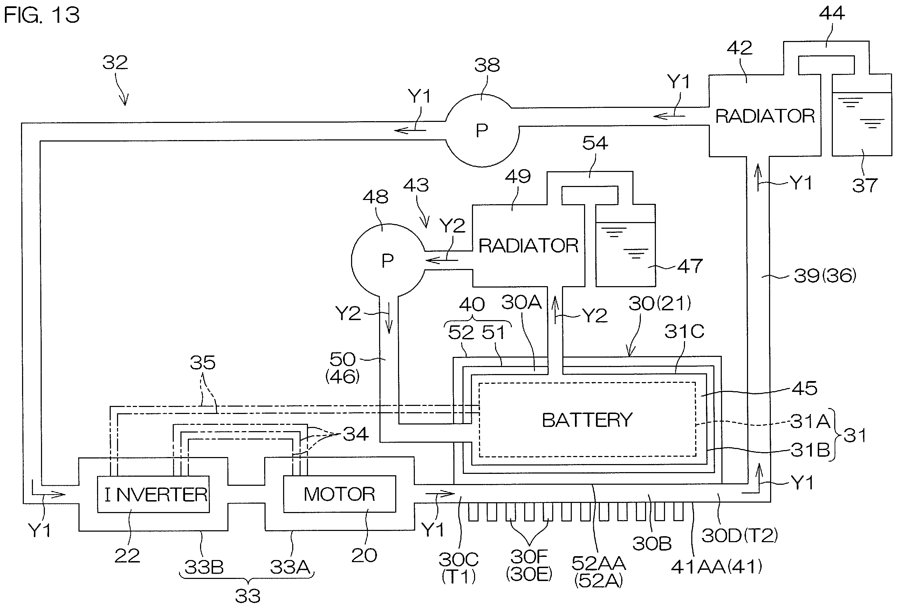

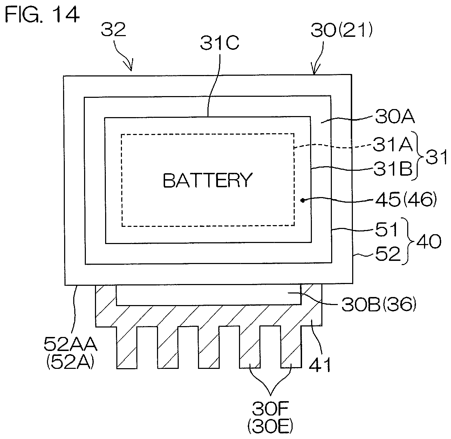

The battery 31 is constituted of a single or plurality of battery cell or cells 31A and a package 31B of box shape that houses the battery cell 31A (see FIG. 13 and FIG. 14 to be described below). Outer surfaces of the package 31B are outer surfaces 31C of the battery 31 (see FIG. 3 to be described below). One example of the battery 31 is a lithium ion battery.

The inverter 22 converts DC power generated by the battery 31 to AC power and supplies it to the electric motor 20. The electric motor 20 thereby operates. The inverter 22 may be included in a motor control unit (MCU) that controls the electric motor 20. In the region X between the front wheel 2 and the rear wheel 3, the electric motor 20 is disposed further to the rear than the inverter 22. The electric motor 20 and the inverter 22 are electronic components other than the battery 31 and are more easily warmed and more easily cooled in comparison to the battery 31. On the other hand, the electric motor 20 and the inverter 22 are higher in operating temperature than the battery 31 and the electric motor 20 is higher in operating temperature than the inverter 22. Here, the operating temperature refers to an ordinary temperature in an operating state of each component and is a temperature that is not more than a maximum allowable temperature in a usage state of each component.

The electric vehicle 1 includes a cooling structure 32 for cooling at least one of either of the electric motor 20 and the inverter 22. In the following, various preferred embodiments of the cooling structure 32 shall be described. FIG. 3 is a schematic view for describing the cooling structure 32 according to a first preferred embodiment.

In the first preferred embodiment and in common to all preferred embodiments from the first preferred embodiment onward, the cooling structure 32 includes the battery case 30 and a hollow cooling jacket 33 that is provided at least at one of either of the electric motor 20 and the inverter 22. In the region X between the front wheel 2 and the rear wheel 3, the battery case 30 is disposed further to the front than the electric motor 20 and the inverter 22 (see FIG. 2).

The battery case 30 includes a housing space 30A that houses the battery 31, a liquid-tight space 30B that is isolated from the housing space 30A, and a coolant entrance 30C and a coolant exit 30D that are in communication with the liquid-tight space 30B. The battery case 30 has an air-cooling portion 30E that defines the liquid-tight space 30B and is exposed to the traveling wind. The air-cooling portion 30E includes a heat sink that is constituted of a single or a plurality of fin or fins 30F. The electric motor 20 and the inverter 22 are electrically connected by three electric lines 34 in accordance with AC power. The inverter 22 and the battery 31 are electrically connected by two electric lines 35 in accordance with DC power.

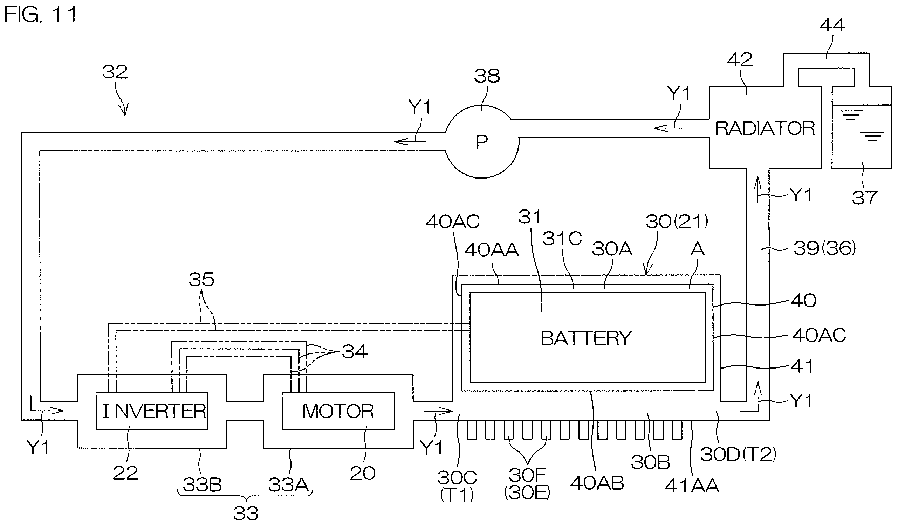

In common to all preferred embodiments, the cooling structure 32 further includes a coolant flow passage 36, a tank 37 that is connected to the coolant flow passage 36, and a pump 38 by which a liquid coolant or other coolant, etc., retained in the tank 37 is made to flow inside the coolant flow passage 36. The coolant flow passage 36 is a flow passage for making the coolant flow and the liquid-tight space 30B of the battery case 30, an internal space of the cooling jacket 33, and an internal space of the pumps 38 are portions of the coolant flow passage 36. The cooling structure 32 also includes a pipe 39 that constitutes the remaining portion of the coolant flow passage 36. The tank 37 is provided for pressure regulation of the coolant flowing through the coolant flow passage 36. The tank 37 may be interposed in an intermediate position of the coolant flow passage 36 (see FIG. 3, etc.) or may be disposed independently of the coolant flow passage 36 and be connected to the coolant flow passage 36 via a pipe 44 (see FIG. 11, etc.). An internal space of the tank 37 in the case of being interposed in an intermediate position of the coolant flow passage 36 constitutes a portion of the coolant flow passage 36.

The pump 38 may be a mechanical pump that operates by receiving the driving force of the electric motor 20 or may be an electric pump that operates by the electric power from the battery 31. When the pump 38 operates, the coolant circulates in the coolant flow passage 36 such that it exits from the liquid-tight space 30B through the coolant exit 30D, passes through the pump 38, the cooling jacket 33, and the coolant entrance 30C in that order, and returns to the liquid-tight space 30B (see flow direction Y1 of the coolant). Thereby, the coolant that is cooled by the air-cooling portion 30E when passing through the liquid-tight space 30B flows out from the air-cooling portion 30E and thereafter arrives at the cooling jacket 33 in a state of comparatively low temperature. Thus, the at least one of the electric motor 20 and the inverter 22 that is the electric component provided with the cooling jacket 33 is cooled by heat exchange with the coolant. Although the coolant that passed through the cooling jacket 33 is of comparatively high temperature due to heat exchange with the electric component, when it returns to the liquid-tight space 30B from the coolant entrance 30C, it is cooled again by the air-cooling portion 30E. A temperature T1 of the coolant flowing into the liquid-tight space 30B from the coolant entrance 30C is thus higher than a temperature T2 of the coolant that flows out from the coolant exit 30D.

The cooling jacket 33, the battery case 30, the pump 38, and the coolant flow passage 36 thus constitute the cooling structure 32 for the at least one of either of the electric motor 20 and the inverter 22 that is the electric component other than the battery 31. It is thus possible to construct the novel cooling structure 32 for the electric component using the battery case 30.

In particular, even if the electric vehicle 1 is the saddled electric vehicle that is comparatively high in restrictions of layout, it is possible to adopt the cooling structure 32. With the saddled electric vehicle, it is possible to proactively dispose the battery case 30 such as to be exposed on an outside of the straddled electric vehicle, enabling the air-cooling portion 30E of the battery 30 to be exposed to the traveling wind efficiently. Also, since the battery case 30 is disposed further to the front than the electric motor 20 and the inverter 22, it is possible to expose the air-cooling portion 30E to the traveling wind even more efficiently. Also, with the straddled electric vehicle adopting the cooling structure 32, it is possible to omit a radiator. Even in a case of equipping a radiator, the radiator suffices to be that of a compact type. Size reduction of the straddled electric vehicle is thereby enabled. Installation of the battery 31 of a large capacity is enabled by omitting or making compact the radiator, thus enabling a cruising distance of the straddled electric vehicle to be increased.

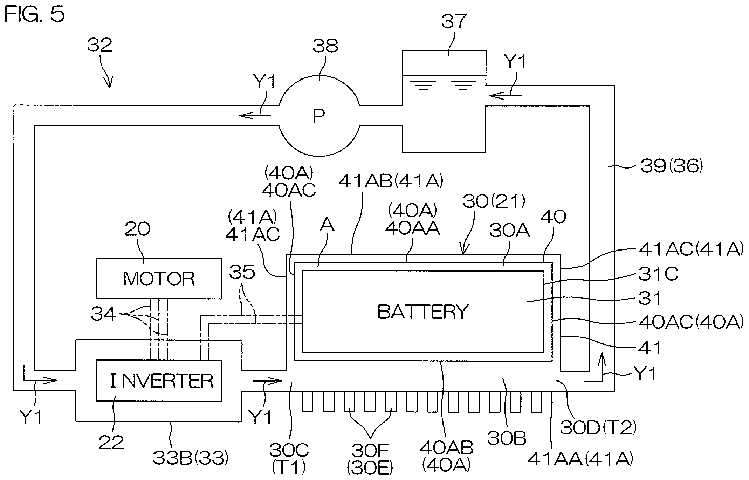

With the first preferred embodiment, a case where the output of the electric motor 20 is comparatively low is assumed. Respective heat generation amounts of the electric motor 20 and the inverter 22 in this case are comparatively low. With the cooling structure 32 according to the first preferred embodiment, just the electric motor 20 is provided with the cooling jacket 33. In the following, the cooling jacket 33 that is provided at the electric motor 20 shall be referred to as a motor cooling jacket 33A and a cooling jacket 33 that is provided at the inverter 22 shall be referred to as an inverter cooling jacket 33B (see FIG. 5 to be described below). In the first preferred embodiment, the inverter 22 that is not provided with the cooling jacket 33 is cooled by ambient air.

With the first preferred embodiment, a radiator is not installed for an entirety of the electric vehicle 1. That is, since the electric vehicle 1 is without any radiator, it is possible to reduce the number of components. Also, the battery case 30 includes an inner case 40 that covers at least a portion of the outer surfaces 31C of the battery 31 and an outer case 41 that is provided with the air-cooling portion 30E and covers at least a portion of outer surfaces 40A of the inner case 40. A heat insulating layer A is formed by air between the outer surfaces 31C of the battery 31 and the inner case 40. The liquid-tight space 30B is defined between the inner case 40 and the outer case 41. According to this arrangement, it is possible to make the battery case 30 have a double structure and use a portion between the inner case 40 and the outer case 41 effectively as the liquid-tight space 30B. The outer surfaces 40A of the inner case 40 include a plurality of surfaces that are exposed to the liquid-tight space 30B.

In FIG. 3, the inner case 40, as one example, is of a box shape that is slightly larger than the battery 31 and covers all outer surfaces 31C of the battery 31. An internal space of the inner case 40 is the housing space 30A of the battery case 30 that houses the battery 31. The housing space 30A and the liquid-tight space 30B are isolated from each other by the inner case 40 therebetween. The outer case 41 is of a box shape slightly larger than the inner case 40 and covers all outer surfaces 40A of the inner case 40. Of the outer surfaces 40A, at least an upper surface 40AA, a lower surface 40AB, and side surfaces 40AC are exposed to the liquid-tight space 30B.

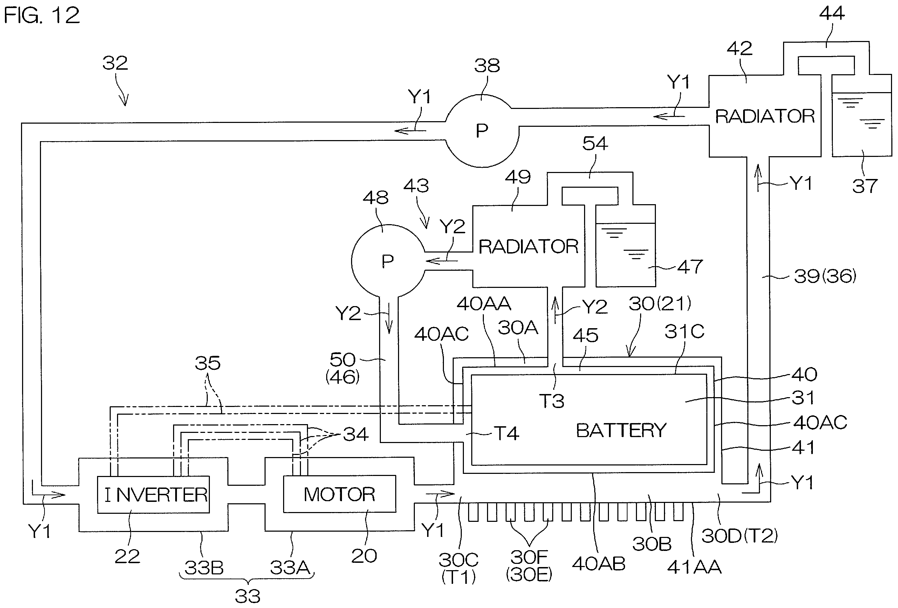

The air-cooling portion 30E of the battery case 30 is provided at a lower surface 41AA that is a portion of outer surfaces 41A of the outer case 41. If, in this case, the air-cooling portion 30E is exposed downward from the cowling 12 (see FIG. 12), the air-cooling portion 30E is readily exposed to the traveling wind flowing along the ground surface, thus enabling the coolant passing through the liquid-tight space 30B to be cooled effectively by the air-cooling portion 30E.

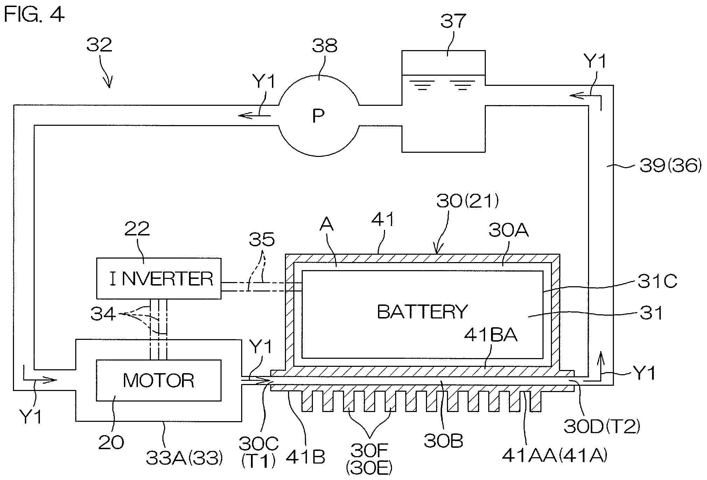

FIG. 4 is a schematic view for describing the cooling structure 32 according to a second preferred embodiment. In the following, portions that are functionally the same as portions described in relation to the first preferred embodiment described above shall be provided with the same numbers and detailed description of such portions shall be omitted. With the battery case 30 of the second preferred embodiment, the inner case 40 is omitted and the liquid-tight space 30B is formed in a wall of the outer case 41. The hatching in FIG. 4 indicates a cross section of the outer case 41. In FIG. 4, as an example, the liquid-tight space 30B passes through the thickness of a lower wall 41B of the outer case 41 and the liquid-tight space 30B is formed just inside the lower wall 41B. The housing space 30A and the liquid-tight space 30B are isolated from each other by a portion 41BA of the lower wall 41B higher than the liquid-tight space 30B. A lower surface of the lower wall 41B is the lower surface 41AA of the outer case 41.

A third preferred embodiment shown in FIG. 5 is a modification example of the first preferred embodiment (see FIG. 3) and with the cooling structure 32 according to the third preferred embodiment, the cooling jacket 33 is provided as the inverter cooling jacket 33B just at the inverter 22. Therefore, with the third preferred embodiment, the electric motor 20 that is not provided with the cooling jacket 33 is cooled by ambient air. In such a case where it is possible to maintain an appropriate operating temperature for the electric motor 20 even with just air cooling, it is possible to omit the cooling jacket for the electric motor 20 as in the third preferred embodiment. On the other hand, if the operating temperature of the inverter 22 is lower than a temperature of outside air and cooling of the inverter 22 by just cooling by ambient air is insufficient, it is preferable to provide the inverter cooling jacket 33B.

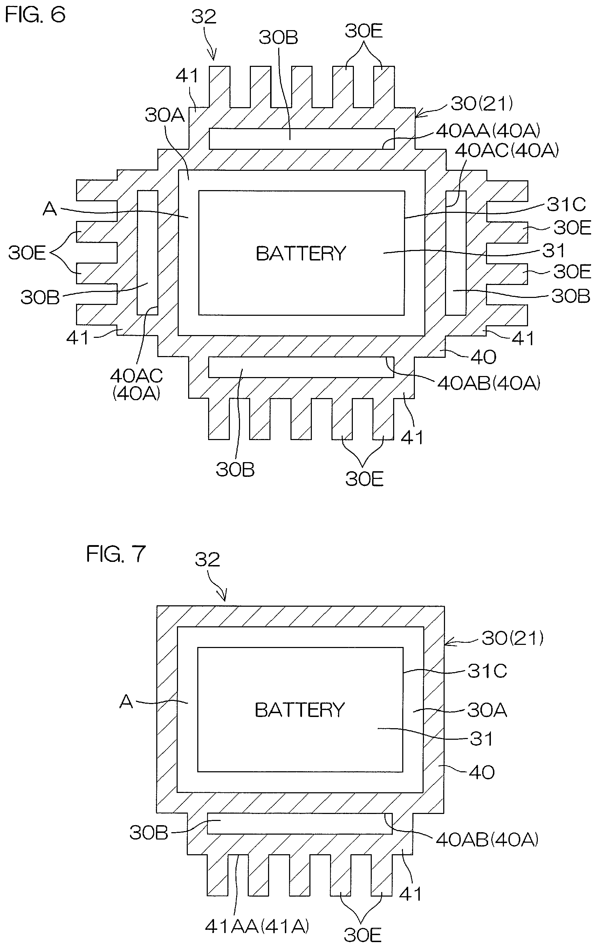

FIG. 6 is a schematic sectional view of the battery case 30 in the cooling structure 32 according to a fourth preferred embodiment. Instead of being of the box shape described above, the outer case 41 may be of a cover shape that covers just a portion of the outer surfaces 40A of the inner case 40. With the fourth preferred embodiment, the outer cases 41 of cover shapes provided with the air-cooling portion 30E are provided such as to respectively cover the plurality of surfaces of the outer surfaces 40A of the inner case 40 one by one. Specifically, in FIG. 6, the upper surface 40AA, the lower surface 40AB, and the side surfaces 40AC of the outer surfaces 40A of the inner case 40 are respectively provided with the outer cases 41. The liquid-tight spaces 30B are defined between the respective upper surface 40AA, lower surface 40AB, and side surfaces 40AC and the corresponding outer cases 41. The liquid-tight spaces 30B may be put in communication with the coolant entrance 30C after merging or be put in communication with the coolant entrance 30C separately. The same applies regarding the coolant exit 30D.

As in a fifth preferred embodiment shown in FIG. 7, just one outer case 41 of the cover shape may be provided and just one of the surfaces among the outer surfaces 40A of the inner case 40 may be covered. The outer case 41 shown in FIG. 7 covers the lower surface 40AB of the inner case 40 from below and the liquid-tight space 30B is defined between the lower surface 40AB and the outer case 41.

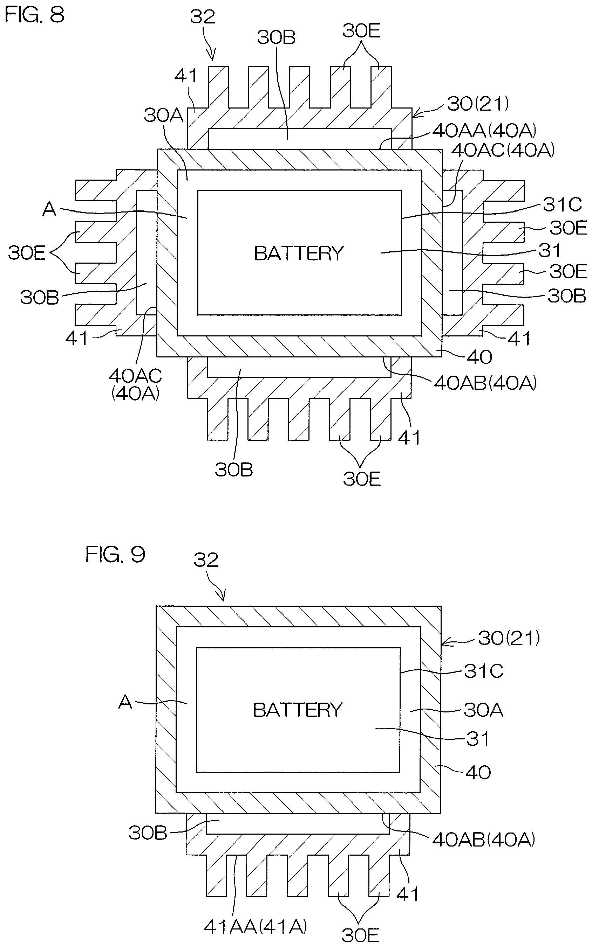

The air-cooling portions 30E may be components that are separate from the battery case 30 as in a sixth preferred embodiment shown in FIG. 8. These may, in this case, be detachable together with the outer cases 41 with respect to the inner case 40 of the battery case 30. As an example, the outer cases 41 are coupled to the inner case 40 by bolts or other fastening members and the air-cooling portions 30E are removable from the inner case 40 by a worker loosening the fastening members. The same applies to a case where, as in a seventh preferred embodiment shown in FIG. 9, the outer case 41 covers just a portion (the lower surface 40AB in FIG. 9) of the outer surfaces 40A of the inner case 40. The detachable air cooling portion 30E has at least the liquid-tight space 30B and may also have at least one of either of the coolant entrance 30C and the coolant exit 30D.

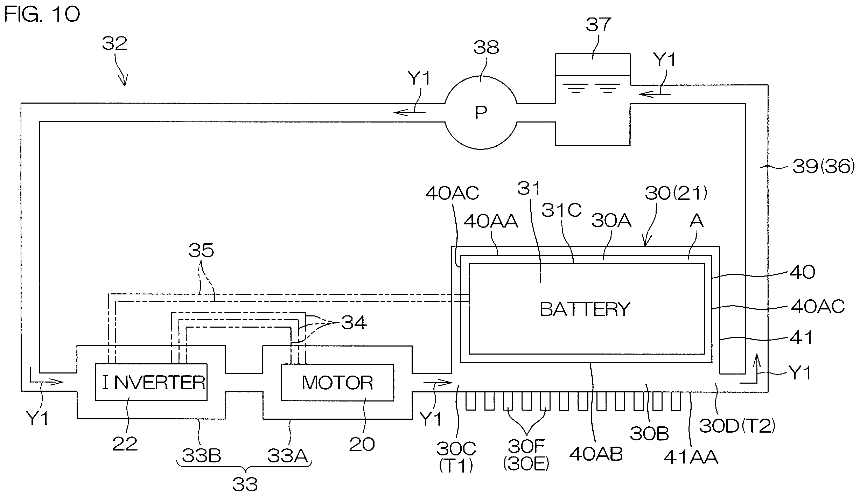

With the cooling structure 32 according to an eighth preferred embodiment shown in FIG. 10, the electric motor 20 and the inverter 22 are each provided with the cooling jacket 33. That is, the cooling jacket 33 includes both the motor cooling jacket 33A and the inverter cooling jacket 33B. In this case, in regard to the flow direction Y1 of the coolant flowing inside the coolant flow passage 36, the inverter cooling jacket 33B is further separated upstream from the coolant entrance 30C than the motor cooling jacket 33A. That is, the coolant exit 30D, the inverter cooling jacket 33B, the motor cooling jacket 33A, and the coolant entrance 30C are disposed successively in regard to the flow direction Y1 of the coolant in the coolant flow passage 36. Thereby, the coolant flowing out from the coolant exit 30D passes through the inverter cooling jacket 33B and then passes through the motor cooling jacket 33A.

As mentioned above, the operating temperature of the inverter 22 is lower than the operating temperature of the electric motor 20. Therefore, according to the arrangement of the eighth preferred embodiment, even if the coolant is made to flow through the inverter cooling jacket 33B and the inverter 22 is cooled first, the temperature of the coolant after passing through the inverter cooling jacket 33B is lower than the operating temperature of the electric motor 20. It is thus made possible to make this coolant flow through the motor cooling jacket 33A to be used to cool the electric motor 20 as well.

The cooling structure 32 according to a ninth preferred embodiment shown in FIG. 11 is a modification example of the eighth preferred embodiment and further includes a radiator 42 that is positioned between the coolant exit 30D and the pump 38 in the coolant flow passage 36. The radiator 42 cools the coolant flowing inside the coolant flow passage 36 from the coolant exit 30D toward the cooling jacket 33. According to this arrangement, the coolant, in passing through the liquid-tight space 30B, is cooled by the air-cooling portion 30E of the battery case 30, is then further cooled by the radiator 42, and thereafter passes through the cooling jacket 33. The electric components provided with the cooling jacket 33 (in FIG. 11, both the electric motor 20 and the inverter 22) are thereby enabled to be cooled effectively. Also, the radiator 42 that is compact suffices since the air-cooling portion 30E of the battery case 30 has a function of cooling the coolant. The tank 37 that is disposed independently of the coolant flow passage 36 is connected to the radiator 42 via the pipe 44 and the coolant flows back and forth between the tank 37 and the radiator 42.

The radiator 42 is disposed further to the front than the battery case 30 (see FIG. 2). The radiator 42 is thereby enabled to be disposed at a position likely to be exposed to the traveling wind, thus enabling an efficiency of cooling of the coolant by the radiator 42 to be improved.

A tenth preferred embodiment shown in FIG. 12 is a modification example of the ninth preferred embodiment, and with the tenth preferred embodiment, a case where the output of the electric motor 20 is even higher than in the preferred embodiments up to now is assumed. In this case, the heat generation amounts of both the electric motor 20 and the inverter 22 are comparatively high and the heat generation amount of the battery 31 is also high. Thus, with the electric vehicle 1 according to the tenth preferred embodiment, a cooling structure 43 for the battery 31 is provided separately of the cooling structure 32 described above.

In regard to the cooling structure 43, in place of the heat insulating layer A by air described above (see FIG. 3), a battery liquid-tight space 45 is defined between the inner case 40 and the battery 31 in the battery case 30. The cooling structure 43 further includes a battery coolant flow passage 46, a battery pressure regulating tank 47 that is provided for pressure regulation of a coolant flowing through the battery coolant flow passage 46, and a battery pump 48 that makes the coolant retained in the battery pressure regulating tank 47 flow inside the battery coolant flow passage 46.

As mentioned above, the operating temperature of the battery 31 is lower than the operating temperatures of the electric motor 20 and the inverter 22. More specifically, an upper limit of the operating temperature of the battery 31 is lower than the ordinary operating temperatures of the electric motor 20 and the inverter 22. The temperature of the coolant used in the cooling structure 43 for cooling the battery 31 is lower than the temperature of the coolant used in the cooling structure 32 for cooling the electric motor 20 and the inverter 22. That is, a requirement concerning the temperature of the coolant differs between the battery 31 and the electric motor 20 and inverter 22. Therefore, as in the tenth preferred embodiment, the cooling structure 43 that is a cooling system for the battery 31 is provided separately of the cooling structure 32 that is a cooling system for the electric motor 20 and the inverter 22 in some cases.

The battery coolant flow passage 46 is a flow passage for making the coolant flow and the battery liquid-tight space 45 and an internal space of the battery pump 48 are portions of the battery coolant flow passage 46. The cooling structure 43 also includes a battery radiator 49 that is interposed between the battery liquid-tight space 45 and the battery pump 48. An internal space of the battery radiator 49 is also a portion of the battery coolant flow passage 46. The cooling structure 43 also includes a pipe 50 that constitutes the remaining portion of the battery coolant flow passage 46. In the tenth preferred embodiment, the battery pressure regulating tank 47 is disposed independently of the battery coolant flow passage 46 by being connected to the battery radiator 49 via a pipe 54 and the coolant flows back and forth between the battery pressure regulating tank 47 and the battery radiator 49. The battery pressure regulating tank 47 may instead be interposed in an intermediate position of the battery coolant flow passage 46 and an internal space of the battery pressure regulating tank 47 in this case constitutes a portion of the battery coolant flow passage 46.

As with the pump 38, the battery pump 48 may be a mechanical pump or may be an electric pump. When the battery pump 48 operates, the coolant circulates in the battery coolant flow passage 46 such that from the battery liquid-tight space 45, it passes through the battery radiator 49 and the battery pump 48 in that order and returns to the battery liquid-tight space 45 (see flow direction Y2 of the coolant). Thereby, the coolant is cooled when passing through the battery radiator 49 and thus, upon flowing through the battery pump 48, arrives at the battery liquid-tight space 45 in a state of comparatively low temperature. The battery 31 is thus cooled by the coolant that arrives at the battery liquid-tight space 45. It is thus possible to cool the battery 31 by the cooling structure 43 separate from the cooling structure 32 for the electric components besides the battery 31. Although the coolant that passed through the battery liquid-tight space 45 is of comparatively high temperature due to heat exchange with the battery 31, it is cooled again when passing through the battery radiator 49. That is, a temperature T3 of the coolant flowing out from the battery liquid-tight space 45 is higher than a temperature T4 of the coolant that flows into the battery liquid-tight space 45.

An eleventh preferred embodiment shown in FIG. 13 and FIG. 14 is a modification example of the tenth preferred embodiment and with the battery 31, the battery liquid-tight space 45 described above is provided in its interior, specifically between the battery cell 31A and the package 31B. Also, the inner case 40 includes a first inner case 51 that covers at least a portion of the outer surfaces 31C of the battery 31 inside the housing space 30A of the battery case 30 and a second inner case 52 that covers at least a portion of the first inner case 51. The second inner case 52 defines the above-described liquid-tight space 30B with the outer case 41. The outer case 41 may be of a box shape (not shown) that covers an entirety of the second inner case 52 or may be of a cover shape that covers just a portion (specifically, a lower surface 52AA) of outer surfaces 52A of the second inner case 52 as shown in FIG. 13 and FIG. 14.

According to the arrangement of the eleventh preferred embodiment, when the battery pump 48 operates, the coolant for cooling the battery cell 31A passes through the battery radiator 49 from the battery liquid-tight space 45 provided in the interior of the battery 31 and returns to the battery liquid-tight space 45. Since the coolant is thus cooled when passing through the battery radiator 49, it returns to the battery liquid-tight space 45 in a state of comparatively low temperature and cools the battery cell 31A inside the battery 31. It is thus possible to cool the battery cell 31A by the cooling structure 43 separate from the cooling structure 32 for the electric components besides the battery 31.

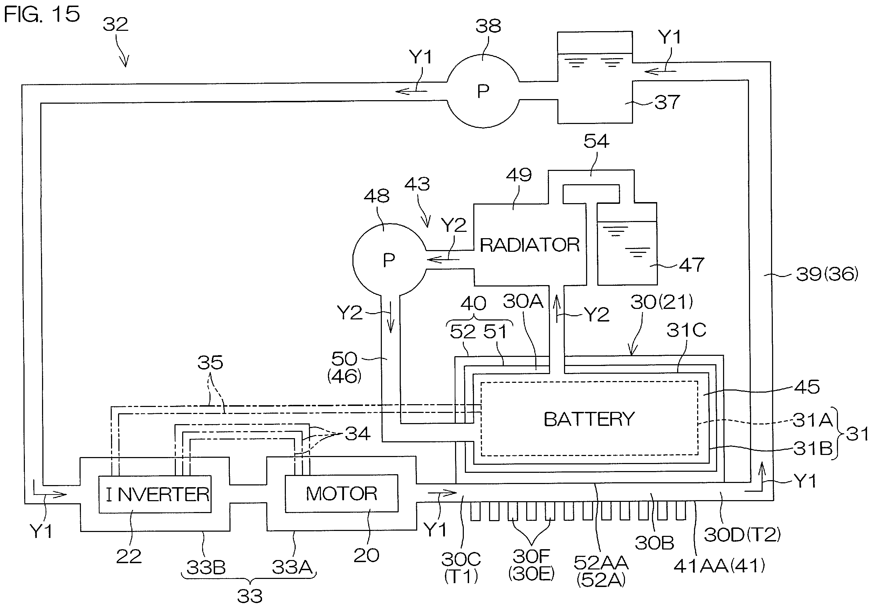

A twelfth preferred embodiment shown in FIG. 15 is a modification example of the eleventh preferred embodiment and in the coolant flow passage 36 of the cooling structure 32, the radiator 42 described above (see FIG. 13) is omitted. That is, a radiator is not installed at all in the coolant flow passage 36. According to this arrangement, since a radiator is omitted from the cooling structure 32 for the electric components besides the battery 31, it is possible to reduce the number of components in the cooling structure 32.

The various features described above may be combined as appropriate.

While preferred embodiments of the present invention have been described above, these are merely specific examples used to clarify the technical content of the present invention, the present invention should not be interpreted as being limited to these specific examples, and the scope of the present invention shall be limited only by the appended claims.

### Reference Signs List

1: electric vehicle, 2: front wheel, 3: rear wheel, 20: electric motor, 22: inverter, 30: battery case, 30A: housing space, 30B: liquid-tight space, 30C: coolant entrance, 30D: coolant exit, 30E: air-cooling portion, 31: battery, 31C: outer surface, 33: cooling jacket, 33A: motor cooling jacket, 33B: inverter cooling jacket, 36: coolant flow passage, 38: pump, 40: inner case, 40A: outer surface, 40AA: upper surface, 40AB: lower surface, 40AC: side surface, 41: outer case, 41AA: lower surface, 42: radiator, 45: battery liquid-tight space, 46: battery coolant flow passage, 48: battery pump, 49: battery radiator, 51: first inner case, 52: second inner case, T1: temperature of the coolant flowing from the coolant entrance 30C into the liquid-tight space 30D, T2: temperature of the coolant flowing out from the coolant exit 30D, X: region between the front wheel 2 and the rear wheel 3, Y1: flow direction of the coolant flowing through the coolant flow passage 36

## Claims

1. An electric vehicle comprising:
an electric motor that generates a driving force for making the electric vehicle travel;
a battery;
an inverter that converts DC power generated by the battery to AC power and supplies the AC power to the electric motor;
a battery case that is provided with a housing space for housing the battery, a liquid-tight space isolated from the housing space, a coolant entrance and a coolant exit in communication with the liquid-tight space, and an air-cooling portion that defines the liquid-tight space and is exposed to a traveling wind;
a cooling jacket that is provided at least at one of the electric motor and the inverter; and
a pump that makes a coolant flow inside a coolant flow passage passing from the liquid-tight space and successively through the coolant exit, the cooling jacket, and the coolant entrance and returning to the liquid-tight space.

2. The electric vehicle according to Claim 1, wherein a temperature of the coolant flowing into the liquid-tight space from the coolant entrance is higher than a temperature of the coolant flowing out from the coolant exit.

3. The electric vehicle according to Claim 2, wherein
the battery case includes an inner case that covers at least a portion of an outer surface of the battery and an outer case that is provided with the air-cooling portion and covers at least a portion of an outer surface of the inner case, and
the liquid-tight space is defined between the inner case and the outer case.

4. The electric vehicle according to Claim 3, wherein the outer surface of the inner case includes a plurality of surfaces that are exposed to the liquid-tight space.

5. The electric vehicle according to Claim 3 or 4, wherein the air-cooling portion is provided at a lower surface of the outer case.

6. The electric vehicle according to any one of Claims 3 to 5, wherein
a battery liquid-tight space that is arranged to cool a battery cell is provided in an interior of the battery, and
the inner case includes a first inner case that covers at least a portion of the outer surface of the battery inside the housing space and a second inner case that covers at least a portion of the first inner case and defines the liquid-tight space with the outer case,
the electric vehicle further comprising:
a battery radiator; and
a battery pump that makes a coolant flow inside a battery coolant flow passage passing from the battery liquid-tight space and through the battery radiator and returning to the battery liquid-tight space.

7. The electric vehicle according to any one of Claims 3 to 5, wherein a battery liquid-tight space is defined between the inner case and the battery,
the electric vehicle further comprising:
a battery radiator; and
a battery pump that makes a coolant flow inside a battery coolant flow passage passing from the battery liquid-tight space and through the battery radiator and returning to the battery liquid-tight space.

8. The electric vehicle according to Claim 6 or 7, wherein a radiator is not installed in the coolant flow passage.

9. The electric vehicle according to any one of Claims 2 to 7, further comprising: a radiator that cools the coolant flowing inside the coolant flow passage from the coolant exit toward the cooling jacket.

10. The electric vehicle according to Claim 9, wherein the radiator is disposed further to the front than the battery case.

11. The electric vehicle according to any one of Claims 2 to 5, wherein a radiator is not installed.

12. The electric vehicle according to any one of Claims 2 to 11, wherein
the cooling jacket includes a motor cooling jacket provided at the electric motor and an inverter cooling jacket provided at the inverter, and
in regard to a flow direction of the coolant flowing inside the coolant flow passage, the inverter cooling jacket is further separated upstream from the coolant entrance than the motor cooling jacket such that the coolant flowing out from the coolant exit passes through the inverter cooling jacket and then passes through the motor cooling jacket.

13. The electric vehicle according to any one of Claims 2 to 12, wherein the air-cooling portion includes a heat sink.

14. The electric vehicle according to any one of Claims 2 to 13, wherein the air-cooling portion is detachable with respect to the battery case.

15. The electric vehicle according to any one of Claims 2 to 14, wherein the electric vehicle is a straddled electric vehicle that includes a front wheel and a rear wheel.

16. The electric vehicle according to Claim 15, wherein the battery case is disposed further to the front than the electric motor and the inverter in a region between the front wheel and the rear wheel.

17. The electric vehicle according to Claim 16, wherein the electric motor is disposed further to the rear than the inverter.
